Europäisches Patentamt

European Patent Office

Office européen des brevets

(11) Publication number: **0 485 982 A2**

# EUROPEAN PATENT APPLICATION

(21) Application number: **91119348.0**

(22) Date of filing: **13.11.91**

(51) Int. Cl.5: **C08G 81/02**

(30) Priority: **13.11.90 IT 2204090**

(43) Date of publication of application:
**20.05.92 Bulletin 92/21**

(84) Designated Contracting States:
**DE ES FR GB IT NL SE**

(71) Applicant: **Himont Incorporated**
**2801 Centerville Road**
**New Castle County Delaware(US)**

(72) Inventor: **Perego, Gabriele**
**3, via Fossigalli**
**I-10015 Ivrea, Torino(IT)**
Inventor: **Albizzati, Enrico**
**64, via Roma**
**I-28041 Arona, Novara(IT)**

(74) Representative: **Zumstein, Fritz, Dr. et al**
**Dr. F. Zumstein Dipl.-Ing. F. Klingseisen**
**Bräuhausstrasse 4**
**W-8000 München 2(DE)**

(54) **Block copolymers.**

(57) Block copolymers obtainable from the condensation reaction of polyolefins containing lateral functional condensable groups, or monoterminated with functional condensable groups, with polymers of anionically polymerizable monomers monoterminated with functional groups capable of undergoing condensation reactions with the condensable functional groups present in the polyolefins.

Rank Xerox (UK) Business Services

(-/2.18/2.0)

The present invention relates to block copolymers obtained from the condensation reaction of grafted polyolefins containing functional condensable groups, or monoterminated with functional condensable groups, with polymers of anionically polymerizable monomers, monoterminated with functional groups which undergo condensation reaction with the condensable functional groups present in the polyolefins.

The usefulness of rendering miscibile mutually immiscible polymers and the need for new materials, brought about the development of efficient grafting methods, as well as the in the depth study of polymers and the products derived from them.

Particularly important are the grafting reactions which can be carried out in apparatuses normally used for the production of polymer materials, extruders in particular. In fact, it is known that various chemical reactions, such as modification and stabilization, can be carried out during extrusion.

For example US 3,177,269 and US 3,177,270, describe the preparation of copolymers grafted by adding a monomer and a radical initiator to a polymer, and then extruding the grafted product. Also the preparation of gratfed copolymers by condensing functionalized polymers, is disclosed in US 4,592,960. Said patent describes the reaction between a polyolefin modified by grafting carboxylic acids or unsaturated anhydrides, and a polymer containing amino groups.

The latter are introduced by chain transfer reaction which leads to a number and a variable disposition of amino groups for each macromolecule.

The polyfunctionality derived from it, after successive reactions with the functionalized polyolefin, essentially leads to grafted polymer materials.

According to the present invention block copolymers with no cross-linking are prepared by the condensation reaction of polyolefins containing functional groups capable of undergoing condensation reaction, with polymers of anionically polymerizable monomers, monoterminated at the end with functional groups which are capable of undergoing condensation reactions with the condensable groups present in the polyolefin. The block copolymers according to the invention are without cross-linking and can be used as plastic materials or as compatibilizers for mutually immiscible polymers, such as polyolefins and polyphenylene oxide, or polypropylene and polystyrene.

Polyolefins with functional groups suitable for the preparation of the block copolymers of the present invention include polyolefins grafted with functionalized monomers such as alpha-beta unsaturated carboxylic acids containing 3-10 carbon atoms and their derivatives such as anhydrides and esters. Examples of said monomers are maleic acid, maleic anhydride, acrylic acid and their esters, methacrylic acid and their esters, itaconic acid and their esters, itaconic anhydride, vinylacetate or other vinylesters.

The grafting reactions of the polyolefins with monomers are carried out in solution or in the molten state, by mixing, a polymer mixture, the compound to be grafted, the radical initiator, and optionally a stabilizer, as described in US 4,506,056. It is also possible to carry out the grafting reaction in a solid state at temperatures lower than the polyolefin melting temperature, but sufficient to permit the radical initiator decomposition, as described in US 3,414,551. Also suitable are processes in aqueous suspension, operating at temperatures higher than 100°C, as disclosed in US 3,652,730. Styrene, styrene derivatives and vinylpiridines can be used as comonomers, together with the above monomers, in the grafting reaction.

Functionalized polyolefins suitable for the preparation of block the copolymers of the present invention include also polyolefins monoterminated with condensable groups which can be obtained from polyolefins monoterminated with ZnR groups wherein R is a $C_{1-10}$ alkyl or aryl group, described in published European application EP-A-O 350 059, corresponding to US serial number 375,947.

Polyolefins monoterminated with ZnR groups are made to react with compounds capable of introducing functional groups which can undergo condensation reactions, such as alpha-halocarboxylic esters and di- or polyisocyanate.

Polyolefins suitable for the preparation of functionalized polyolefins are selected from homopolymers and copolymers of $CH_2 = CHR$ olefins, where R is a hydrogen or a $C_1$-$C_6$ linear or branched alkyl radical.

Examples of said polymers are polypropylene, preferably having an isotactic index higher than 90%, HDPE, LLDPE, LDPE polyethylene, ethylene-propylene elastomeric copolymers optionally containing minor portions of diene and crystalline polymers of butene-1, or 4-methyl-pentene-1.

The functionalization of polymers of anionically polymerizable monomers is carried out using reagents selected on the basis of the specific functional group which one wants grafting. For instance the preparation of hydroxypolystyrene is carried out by reacting lithium terminated polystyrene (polystyryl lithium) with ethylene oxide, while for producing amino polystyrene polystyryl lithium is reacted with N-(trimethylsilyl) benzaldimine. The preparation of the latter and its reactions are described in Makromol. Chem., Rapid. Comm. 3, 59-63 (1982) and in Makromol. Chem., 184, 1355-1362 (1983). Furthermore polystyrene terminated with carboxylic acid group can be obtained by reaction of polystyryl lithium with carbon dioxide.

The preparation of block copolymer, according to the present invention, can be carried out in solution or in the molten state by means of any known mixers or extruders. Useful sovents for the above functionalized polymers are for instance: benzene, toluene, xylene, tetrachloroethane and methylcyclohexane.

The condensation reaction temperature is from 50°C to 200°C, preferably from 100°C to 200°C.

The reaction time is determined by the specific reaction, the operating temperature, the type of solvent and molecular weight of the reacting polymers.

At the end of the reaction the block copolymer obtained is separated by removing the solvent, or by precipitation in an appropriate non-solvent and consequent filtration.

The condensation reaction in the molten state is preferably carried out by dry mixing the functionalized polyolefin and the functionalized polymer, and optionally, with suitable stabilizers, and then by keeping the mixture over its melting point (preferably 20-30°C higher). Any known polymer mixers and extruders can be used.

Temperatures are generally from 100°C to 300°C, preferably it is operated at temperatures tipically used for the extrusion of each polymer.

Reaction times can broadly vary and are determined by the specific reaction type, operating temperature, type of apparatus, and molecular weight of the reacting polymers.

The presence of the block copolymer structure in the polymers of the instant invention, can be established according to appropriate analytical techniques. For example, relaxation times measured with an $^1$H- N.M.R. spectroscope in the solid state, or the direct observation of the structure by means of optic or electronic microscopy are suitable. In the case of a block copolymer prepared by reaction Hercoprime G (polypropylene grafted with 3.2% of maleic anhydride) with aminopolystyrene, for instance, the formation of a homogeneous phase can be clearly established with an S.E.M..

The amount of non-grafted polymer fraction can be determined according to various methods. In the case of low molecular weight polymers, free functional groups deriving from ester, amide or imide bonds can be quantitatively detected by I.R. spectroscopy. For polymers with higher molecular weight it is appropriate to use selective solvent extraction of the fraction non-chemically bonded.

Detection of the molecular weight increase, also allow one to establish the formation of the block copolymers of the present invention and also to estimate their yield.

The following examples are given in order to illustrate and not limit the invention.

**Example 1**

Aminopolystyrene was prepared using cyclohexane refluxed for a few hours on $LiAlH_4$, and then distilled in nitrogen. The styrene was percolated on activated alumina, then used directly for the anionic polymerization. Secondary butyl lithium in 1.3 M solution in hexane was used as initiator. The flask used was a 1 liter one, with 4 necks, mechanical agitator, thermometer, and maintained under nitrogen. 500 ml of cyclohexane and 1 ml of styrene were introduced. The content was heated to 40°C, and then, while under agitation, the traces of humidity present were titrated with the 1.3 M solution of sec. butyl lithium until a constant light yellow colour was reached. At this point 50 g of styrene and 0.65 ml of 1.3 M sec. butyl lithium solution were added. With the addition of said sec.butyl lithium an orange colouration was immediately obtained. The preparation of the polystyryl lithium, carried out with exothermia and increased viscosity, was finished within one hour, and the solution was stirred for another two hours before the functionalization stage.

Then, under nitrogen, 0.5 ml of N-(trimethylsilyl) benzaldimine were added drop by drop. Said addition was followed by a rapid decoloration of the solution to a light yellow. An additional 2 ml of N-(trimethylsilyl)benzaldimine were added, which caused further decolouration of the solution. 2 ml of water and 2 ml of ethanol were then added and mixing was continued for 3 more hours, after which the solution was poured in one liter of methanol, thus precipitating the polymer. After having removed the solvent, 500 ml of methylethylketone were added to obtain a solution.

The hydrolysis stage, and thus the release of the amino groups, was carried out by adding 10 ml of water and stirring for 4 hours. The polymer was then precipitated by pouring the solution in 1.5 l of methanol. After having removed the solvent, the solvent was substituted with one liter of methanol and dried under vacuum at 35°C until it reached a constant weight. 49 g were obtained, equal to a 96% yield. The nitrogen content determined by means of titration according to Kjeldhall was 0.021% (calculated based on Mw = 60000 = 0.023%).

Next, a mixture containing 50 g of Hercorprime G (polypropylene grafted with 3.2% maleic anhydride), 50 g of amino polystyrene with Mw = 60000 prepared above, 0.050 g of Irganox 1010 stabilizer, 0.025 g of B.H.T. and 0.10 g of T.P.L. was prepared.

Said mixture was introduced into the hopper of a single screw extrude, with a 3.17 mm capillary, no degassing, and regulated at a final temperature of 190°C. The residence time of the polymer inside the extruder was about 5 minutes, with a rotation velocity of 11 rpm/minute. In order to prolong the reaction time, thus improving the mechanical properties of the material, the latter was reextruded.

Extraction by means of hot methyethylketone (which makes it possible to remove the non-chemically bonded polystyrene), allowed us to calculate that the yield of grafted copolymer was 45%. Determination of the molecular weight by means of G.P.C. shows an increase from $Mw = 64000$ (pertaining Hercoprime G resin), to $Mw = 103000$.

## Example 2

Hydroxypolystyrene was prepared using polystyryl lithium made as described in Example 1, and in the same quantities, except for the quantity of the initiator, which was such to give a molecular weight of $Mw = 21000$ (i.e. 1.70 ml of 1.3 M sec-butyl-lithium solution). Some ethylene oxide was allowed to bubble in said solution, thus causing a progressive decolouration at the end of which the addition was suspended.

After approximately fifteen minutes, 2 ml of water and 2 ml of ethanol were added to neutralize the polymer chains.

The product was then poured into one liter of methanol which caused the polymer to precipitate immediately. Then the solvent was removed and substituted with one liter of fresh methanol while agitating vigorously. The polymer was agitated for ten hours, then filtered, washed with methanol and dried under vacuum at 50°C until it reached constant weight. 49.5 g of polymer were obtained, equal to a 97% yield. The presence and quantification of the $CH_2OH$ terminal groups was possible through $^1$H- N.M.R. spectroscopy, which showed the methylene adjacent to the alcohol group. The related integral shows a 2% deviation compared to the value calculate based on the known length of the chains.

The hydroxypolystyrene was reacted with Hercoprime G resin in extrusion according to the procedure described in Example 1. The determination of molecular weight through G.P.C. shows an Hercoprime G resin based increase from Mw-64000 to $Mw = 94000$.

## Example 3

Into a 100 ml flask were introduced 0.50 g of Hercoprime G resin, heating it to 200°C; vacuum was then applied and maintained for 30 minutes, thus favoring the dehydration of the hydrolyzed units of grafted maleic anhydride. After cooling to room temperature, 8 ml of anhydrous xylene were added and then the mixture was heated to 130°C, thus obtaining a clear and agitated solution. 0.50 g of aminopolystyrene with $Mw = 60000$ were added, whose dissolution was followed by a gradual clouding and partial precipitation of the polymer. The system was maintained under agitation for 20 hours, after which the pressure was gradually reduced while maintaining the temperature at 130°C, thus allowing the solvent to be removed by evaporation and obtaining a mass of translucent material. The temperature was then brought to 200°C in order to favor the cyclization reaction and obtain a mass of ivory colour opaque material. Determination of molecular weight by means of G.P.C. showed a value of $Mw = 147000$.

## Example 4

Into a 100 ml flask were introduced 0.50 g of Hercoprime G resin, which was treated according to the method described in example 3, in order to favor dehydration. After cooling to room temperature, 8 ml of anhydrous xylene were added, and the temperature was raised to 130°C, thus obtaining a clear and agitated solution. Then 0.50 g of hydroxypolystyrene with $Mw = 21000$ were added, and the mixture stirred for 20 hours. Gradually the solution became cloudy, and the polymer started to precipitate. At the end, after cooling, 100 ml of methanol were introduced and the mixture was mixed for 2 hours, then filtered and dried. The determination of the molecular weight by means of G.P.C showed $Mw = 75000$.

## Claims

1. A block copolymer produced by the condensation reaction between a polyolefin containing lateral condensable functional groups, or a polyolefin monoterminated with a functional condensable group and a polymer of anionically polymerizable monomer(s) which latter polymer is monoterminated with a functional group capable of undergoing a condensation reaction with the condensable functional groups of said polyolefin.

2. The block copolymer of claim 1 wherein said polyolefin containing lateral condensable functional groups is a polyolefin grafted with an alpha-beta unsaturated carboxylic acid or a derivative thereof.

3. The block copolymer of claim 1 wherein said polyolefin is selected from the group consisting of polypropylene, HDPE, LDPE, LLDPE, polybutene-1, poly4-methyl-pentene-1 and ethylene-propylene elastomeric copolymers, optionally containing minor portions of a diene.

4. The block copolymer of claim 1 wherein said polyolefin containing lateral condensable functional groups is a polypropylene grafted with an alpha-beta unsaturated carboxylic acid or derivative thereof.

5. The block copolymers of claim 4 where said derivative of the alpha-beta unsaturated carboxylic acid is maleic anhydride.

6. The block copolymer of claim 1 wherein said polymer of anionically polymerizable monomer(s) is a polystyrene monoterminated with a functional group.

7. The block copolymer of claim 6 wherein the polyolefin containing lateral condensable functional groups is a polypropylene grafted with maleic anhydride, and said polystyrene monoterminated with functional groups is selected from the group consisting of aminopolystyrene or hydroxypolystyrene.